# EUROPEAN PATENT APPLICATION

(11) **EP 1 511 208 A2**
(43) Date of publication of application: **02.03.2005**
(21) Application number: 04292059.5
(22) Date of filing: 18.08.2004
(51) Int. Cl.: H04J 14/02

(54) **A branching unit with full or partial broadcast of wavelengths**

(30) Priority: 27.08.2003 GB 0319965
(71) Applicant: ALCATEL, 75008 Paris (FR)
(72) Inventor: Frisch, Tony, Blackheath London SE3 7PJ (GB)
(74) Representative: Vigand, Régis Louis Michel

(57) **Abstract**

A branching unit (1) for optical transmission systems having a coupler (5; 5'). An incoming optical signal carrying a plurality of optical channels (3) is fed into the coupler from a first input port (11). The optical incoming signal has empty channel slots. The coupler (5; 5') adds new channels (6) coming from a branch path (4) to the incoming optical signal by filling the empty channel slots with the new incoming channels (6).

## Description

The present invention relates to an optical branching unit for optical transmission systems having the capability of fully or partially broadcasting wavelengths.

### BACKGROUND OF THE INVENTION

Modern optical communications systems typically use many separate but interconnected optical transmission lines. These optical transmission lines are typically interconnected using branching units which allow selected optical signals to be removed from any one optical transmission line and inserted into another connected optical transmission line.

Current optical branching units typically employ optical components which permit selected portions of optical signals to be removed from a transmission line and inserted in to another transmission line on the basis of wavelength. This form of branching unit is particularly suited to use with wavelength division multiplex (WDM) signals comprising a plurality of distinct but closely spaced wavelength channels. The branching unit may be configured to drop and add specific WDM wavelength channels from a particular transmission line.

A simple implementation of the branching in a submarine transmission network is one where some optical fibres take one path while others follow another path. This provides only a coarse division of the traffic. However, in practice it is desired that the system provides greater flexibility and that smaller units of traffic― typically one or more wavelengths ― are diverted.

An example of a known branching unit of this type is one which incorporates wavelength-selective filters. This type of branching unit can provide the required functionality, but suffers from two technical drawbacks:

One drawback is that the demands on the filter in terms of stability and cut-off slope are generally hard to meet. These problems occur when the filter cannot distinguish the different wavelengths corresponding to different channels. Another drawback is that conventional filters are passive devices which can divert only fixed wavelengths. Therefore, in case it is needed that the wavelength to be filtered is selectively changed, conventional filters cannot satisfy the requirement.

Another known solution is to perform all the processing in the terminal equipment, namely all the wavelengths are sent to the terminal and a significant number thereof are again returned to the branching unit. Nonetheless, processing these wavelengths require significant equipment in the terminal, thus giving rise to a substantial increase in cost.

Currently, stability and cut-off slope issues are dealt with by spacing the wavelengths by a separation which makes the filter design possible. A known method of spacing is based on the fact that systems operate at 2.5 Gbit/s with separations of 100 GHz or more. So far, systems with wavelength-routing and operating at 10 Gbit/s are not known in the market. However, systems based on large separation of wavelengths are also unattractive, as they reduce the capacity of the link due to said large separation.

As a remedy to the above drawback, one possible solution would be based on a set of fixed optical filters and a set of switches which could provide a degree of flexibility. However, here again a set of different fixed filters and switches represent significant complexity in the whole system, which in turn has an impact on cost and reliability of the branching unit.

Thus, there is a recognised need for optical branching units which do not suffer from the above drawbacks and limitations caused by complexity, increased cost and lack of flexibility. The present invention aims to provide a branching unit which overcomes at least some of these deficiencies in the prior art.

### DESCRIPTION OF THE INVENTION

The above drawbacks are overcome by the solution proposed by the present invention according to which a number of channel slots are left empty on a trunk path of an optical transmission system. A coupler can then add wavelengths into the empty slots provided.

According to an embodiment of the invention, all of the channels, i.e. the incoming channels and the added ones, will be broadcast to both trunk and branch lines. The process of selecting the desired channels is carried out by the terminal equipment, which will already contain the filtering necessary to select individual channels. Unwanted channels are simply ignored.

Accordingly an object of the present invention is that of providing a branching unit having a first optical input port for receiving optical signals of a first optical transmission line of an optical network, said first optical transmission line being adapted for carrying a plurality of channels, a second optical input port for receiving optical signals from a second optical transmission line, a first output port for outputting optical signals on said first optical transmission line and a second output port for outputting optical signals on a third optical transmission line, characterized in that said first optical transmission line comprises at least one empty channel slot for receiving at least one channel containing a wavelength.

According to an aspect of the invention the branching unit comprises at least one optical coupler for adding said at least one channel containing a wavelength onto the first optical transmission line.

According to another aspect of the invention said at least one optical coupler is further adapted for providing an output signal to the first and second output ports such that each output signal at said first and second output ports comprises said plurality of channels present on said first optical input port and the at least one channel added onto said first optical transmission line.

According to yet another aspect of the invention, the branching unit comprises at least two couplers, a first coupler being adapted for adding said at least one channel containing a wavelength onto the first optical transmission line and a second coupler for dropping channels present on the first optical transmission line.

According to still another aspect of the present invention said second optical input port is adapted for inputting said least one channel containing a wavelength into a respective coupler.

Another object of the present invention is that of providing a method of broadcasting in a branching unit having a first optical input port for receiving optical signals of a first optical transmission line of an optical network and carrying a plurality of channels, a second optical input port for receiving optical signals from a second optical transmission line, a first output port for outputting optical signals on said first optical transmission line and a second output port for outputting optical signals on a third optical transmission line, characterized by the further step of:
- Providing at least one empty channel slot in said first optical transmission line for receiving at least one channel containing a wavelength.

According to an aspect of the invention at least one channel containing a wavelength is added onto the first optical transmission line by means of an optical coupler.

According to another aspect of the invention an output signal is provided by said at least one optical coupler to the first and second output ports such that each output signal at said first and second output ports comprises said plurality of channels present on said first optical input port and the at least one channel added onto said first optical transmission line.

According to yet another aspect of the invention, said at least one channel containing a wavelength is added onto the first optical transmission line by means of a first coupler and said channels present on the first optical transmission line are dropped therefrom by means of a second coupler.

According to still another aspect of the present invention said least one channel containing a wavelength is fed into a respective coupler through said second optical input port.

According to an aspect of the present invention, a desired channel is selected at a terminal end of the transmission line by means of a filtering procedure.

These and further advantages of the present invention are described in more detail in the following description as well as in the claims with the aid of the accompanying drawing.

### BRIEF DESCRIPTION OF THE DRAWING

Figure 1 is a simplified schematic representation of a branching unit according a first embodiment of the present invention.
Figure 2 is a simplified schematic representation of a branching unit according a second embodiment of the present invention.
Figure 3 is a simplified schematic representation of a branching unit according a third embodiment of the present invention.

### DESCRIPTION OF THE PREFERRED EMBODIMENTS

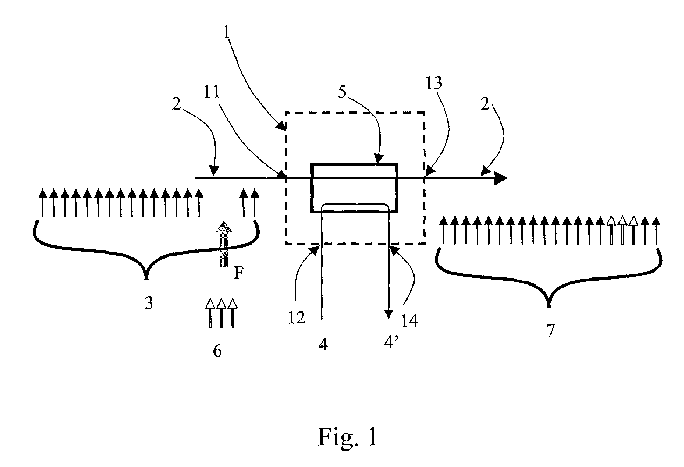

In figure 1, a branching unit 1 is represented wherein a first optical transmission path 2, hereinafter referred to as trunk path, carrying a plurality of optical signal channels 3 is input in the branching unit 1 at an input port 11. The trunk path 2 is output from the branching unit 1 at the output port 13 as shown in the figure.

A second optical transmission path 4, hereinafter referred to as branch path, is connected to the branching unit 1 at the input port 12. The second optical transmission path is output from the branching unit at the output port 14 forming the output path 4'.

According to the invention, the branching unit 1 comprises a coupler 5. The coupler 5 receives the input data carried on the trunk path 2 as well as that of branch path 4 and is capable of coupling channels from the branch path 4 into the trunk path 2.

With the above arrangement, the principle of operation is that on the trunk path 2, as it enters the input port 11 of the branching unit and consequently into the coupler 5, a number of channel slots are left empty. The location of the empty channel slots are represented in the figure by the arrow F pointing onto a blank space in the array of incoming channels 3 on the trunk path 2.

A number of channels 6 are to be added to the trunk path through the branch path 4. These channels are therefore input, through input port 12 into the branching unit 1 and consequently into the coupler 5. The coupler 5 adds the new channels 6 onto the trunk path by filling the empty channel slots with the wavelength(s) contained in the new channels 6. The resulting signal 7, being an aggregate of the channels already existing 3 on the trunk path 2 and the channels 6 added by coupler 5, is output from the coupler 5 and consequently from the branching unit 1 from both output ports 13 and 14.

As a result, all of the channels 7 will be broadcast to both trunk 2 and branch 4'.

At the receiver end, the process of selecting the desired channels is carried out by the terminal equipment containing the filtering necessary to select individual channels. The unwanted channels are simply ignored.

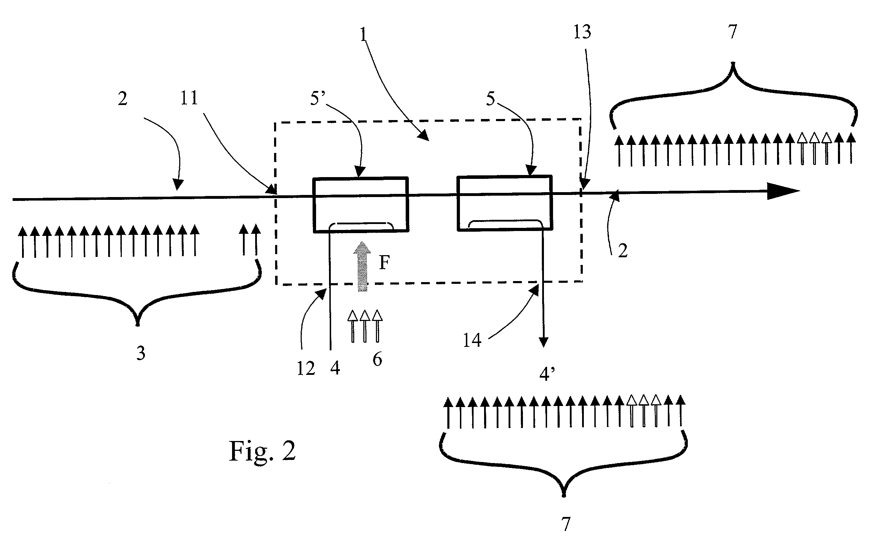

Figure 2 shows an alternative embodiment of the present invention according to which two couplers 5 and 5' are used instead of one as was the case in the embodiment of figure 1. In figure 2, like elements have been designated by like numeral references of the elements of figure 1. As it is readily observed form figure 2, the incoming signal 3 at the input port 11 and having a number of empty channel slots is input into the coupler 5' which is in charge of adding the new channels 6 input from the input port 12 onto the trunk path 2 as shown by arrow F. Next the resulting aggregate signal is entered into the coupler 5 which is in charge of dropping the aggregate signal 7 through the output port 14 onto the branch path 4' while the same aggregate signal 7 is output from the output port 13 on the trunk path 2.

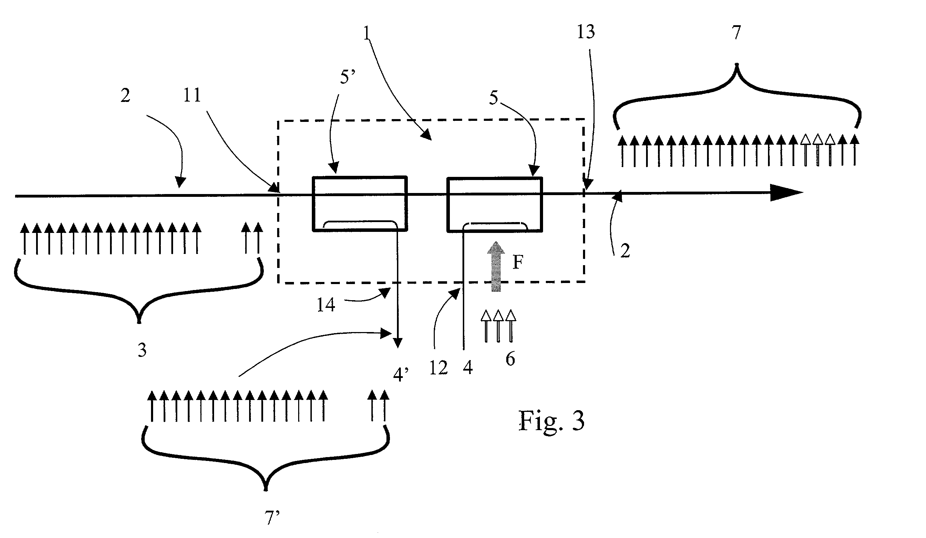

Figure 3 shows a further alternative embodiment of the present invention according to which two couplers 5 and 5' are used as was the case in the embodiment of figure 2. Here again, like elements have been designated by like numeral references of the elements of figures 1 and 2. As it may be observed form figure 3, the incoming signal 3 at the input port 11 and having a number of empty channel slots is input into the coupler 5' which in this case is in charge of dropping incoming signal 3 to a branch path 4'. In the figure, the dropped signal is shown by reference numeral 7' being output from the output port 14 of the coupler 5' which on the trunk path forwards the incoming signal 3 towards the coupler 5. Next, the new channels 6 are input into the coupler 5 through the input port 12 and are thus added onto the trunk path 2 as shown by arrow F. The resulting aggregate signal 7 is output from the output port 13 on the trunk path 2.

It is to be noted that for the sake of simplicity and ease of understanding, the figure shows only one direction of transmission, as in general the trunk consists of a pair of fibres and thus, a second coupler and branch pair, with the same functionalities as described above, would generally be required.

It is also to be noted that in practice the transmission systems of this kind do not work in an appropriate manner if only a few channels are present on the transmission paths, for example on the branch path 4. Usually more channels need to be transmitted for a satisfactory operation. Therefore in practice, a number of so called "dummy wavelengths", or "loading channels" are added to the useful channels in the transmission line, e.g. the branch path 4. Within the branching unit however, these extra and unwanted channels have to be removed. Therefore a coarse filter (not shown in the figures) is usually included at the input port 12 of the branching unit in order to remove said loading channels before the signal is fed to the respective coupler 5 or 5'. Equally said coarse filter could be outside the branching unit.

The adding of the coarse filter does not of course affect the implementation of the solution of the invention in a branching unit and is only mentioned herein for a better understanding of a practical application of the invention.

It is further to be noted that the added wavelengths should not be the same as those that are dropped.

The solution herein proposed by the present invention provides the important advantage that the branching unit structure becomes extremely simple and that nowhere in the submerged plant is there a difficult requirement for optical filters. This gives obvious benefits in terms of cost, reliability and size.

A further advantage is that due to the broadcast nature of the branching process there is a degree of flexibility in wavelength selection which otherwise would not be possible with fixed filters.

In practice, wavelengths may be used either for the through path, or as Add/Drop channels, and changes thereof would be possible even after the system is submerged in the water. In any case, the principle of the invention would be equally applicable.

## Claims

1. A branching unit (1) having a first optical input port (11) for receiving optical signals of a first optical transmission line (2) of an optical network, said first optical transmission line (2) being adapted for carrying a plurality of channels (3), a second optical input port (12) for receiving optical signals from a second optical transmission line (4), a first output port (13) for outputting optical signals on said first optical transmission line (2) and a second output port (14) for outputting optical signals on a third optical transmission line (4'), **characterized in that** said first optical transmission line (2) comprises at least one empty channel slot for receiving at least one channel containing a wavelength.

2. A branching unit according to claim 1 wherein said branching unit comprises at least one optical coupler for adding said at least one channel containing a wavelength onto the first optical transmission line.

3. A branching unit according to claim 2 wherein said at least one optical coupler is further adapted for providing an output signal to the first and second output ports such that each output signal at said first and second output ports comprises said plurality of channels present on said first optical input port and the at least one channel added onto said first optical transmission line.

4. A branching unit according to claim 2 wherein the branching unit comprises at least two couplers, a first coupler being adapted for adding said at least one channel containing a wavelength onto the first optical transmission line and a second coupler for dropping channels present on the first optical transmission line.

5. A branching unit according to claim 1 wherein said second optical input port is adapted for inputting said at least one channel containing a wavelength into a respective coupler.

6. A method of broadcasting in a branching unit (1) having a first optical input port (11) for receiving optical signals of a first optical transmission line (2) of an optical network and carrying a plurality of channels (3), a second optical input port (12) for receiving optical signals from a second optical transmission line (4), a first output port (13) for outputting optical signals on said first optical transmission line (2) and a second output port (14) for outputting optical signals on a third optical transmission line (4'), **characterized by** the further step of:
- providing at least one empty channel slot in said first optical transmission line (2) for receiving at least one channel containing a wavelength.

7. A method according to claim 6 wherein at least one channel containing a wavelength is added onto the first optical transmission line by means of an optical coupler.

8. A method according to claim 7 wherein an output signal is provided by said at least one optical coupler to the first and second output ports such that each output signal at said first and second output ports comprises said plurality of channels present on said first optical input port and the at least one channel added onto said first optical transmission line.

9. A method according to claim 7 wherein said at least one channel containing a wavelength is added onto the first optical transmission line by means of a first coupler and said channels present on the first optical transmission line are dropped therefrom by means of a second coupler.

10. A method according to claim 7 wherein said least one channel containing a wavelength is fed into a respective coupler through said second optical input port.

11. A method according to claim 6 wherein a desired channel is selected at a terminal end of the transmission line by means of a filtering procedure.
